# EUROPEAN PATENT APPLICATION

(11) **EP 3 996 323 A1**
(43) Date of publication of application: **11.05.2022**
(21) Application number: 20206442.4
(22) Date of filing: 09.11.2020
(51) Int. Cl.: H04L 9/08, H04L 9/32

(54) **DIGITAL SIGNING OF A DATA STRUCTURE**

(71) Applicant: Armleder, Sebastien, 1227 Carouge (CH)
(72) Inventor: Armleder, Sebastien, 1227 Carouge (CH)
(74) Representative: Stellbrink & Partner Patentanwälte mbB

(57) **Abstract**

The present invention relates to a method. The method comprises using a device comprising a secure section and wherein the secure section comprises a private key. The method further comprises transmitting a data element from the user terminal to the device, and in response to receiving the data element, the device encrypting a hash of a data structure by means of the private key and thereby generating a signed data structure hash. Further, the present invention also relates to a system, wherein the system is configured to perform the method according to the present invention.

## Description

The present invention generally relates to digitally signing of data structures. In particular, the present invention may relate to a method and system for secure signing of a data structure, e.g. a smart contract command, interaction, action or transaction (such as in its most simple form, a digital asset transfer on a blockchain), by means of a private key.

The increasing digitalization of every-day life has sparked a demand for secure and reliable means for digitally signing data structures, such as digital documents or smart contract actions or transactions. Especially for sensitive areas that may be susceptible to fraud, e.g. financial transactions, insurance, or mortgage, a high level of security is required. In particular private keys often used to digitally sign data structures need to be protected from fraudulent use and/or loss.

One particular example where a safe and reliable way for digital signing of data structures is required are interactions with so-called smart contracts, so called smart contract interactions. Smart contracts may generally be based on the blockchain technology, which gains an ever-increasing importance in the field of data security and integrity. In very simple terms, blockchain technology is based on storing and transmitting data in blocks, which follow a chronological sequence and are connected with each other in a chain-like structure. Every block contains relevant information, e.g. about transactions, timestamps, a unique cryptographic code based on the other content of the block, also known as hash, as well as the hash of the previous block. This allows for cryptographically securing the information within the block as any modification to the data within a block would change its hash. Thus, for retroactively altering a block, also all subsequent blocks would require respective alterations. Moreover, the corresponding database is typically managed in a peer-to-peer network and shared and synchronized in a decentralized network.

Such blockchain networks can for example be used to provide the basis of a cryptocurrency such as Bitcoin. However, potential applications comprise a much broader scope which also includes said smart contracts, which have for example been realized by Ethereum, a cryptocurrency platform providing smart contract functionality.

A smart contract may generally provide similar functionality as a normal contract. It may for example relate to exchanging money, property, shares or other valuables. However, smart contracts may advantageously allow for doing so securely and transparently based on blockchain technology. Thus, smart contracts may not require involving any third party, e.g. a broker, which may save resources and/or time as everything (or at least a substantial portion of the transaction) can be carried out digitally and automatically. Such smart contracts may be particularly trustworthy and less error prone than traditional paperwork.

In other words, the terms of agreement between contracting parties are written directly in lines of code such that the contracts are self-executing. The contracts are stored in a decentralized blockchain network, which allows for traceable, transparent and irreversible transactions. Further, the compliance of contracts may be automatically monitored, without any need for a central authority.

In order to conclude a smart contract action or transaction (interactions), typically one or both parties need to digitally sign the smart contract interactions (e.g. inputs) once rules, terms and conditions have been defined. Therefore, a secure and trustworthy method for signing such interactions with the digital contracts is needed. Generally, the process of digitally signing a smart contract action or transaction, i.e. smart contract interactions, may also be referred to as digitally signing a smart contract.

Digital signing of documents is typically based on an encryption mechanism that involves a public and a private key, also known as asymmetric cryptography. A public or private key usually comprises a long series of alphanumeric characters which is generated by a complex mathematical algorithm. The private key may be used to digitally sign a document or message and the public key can be used to verify its authenticity. That is, any holder of the private key can apply a signing algorithm that determines a corresponding value for a data structure to be signed, known as a digital signature, which indicates the signing of the data structure by the holder of the private key. The validity of the signature may be confirmed utilizing the public key which may be generally publicly available.

Therefore, the security of the digital signature and/or encryption technologies depends heavily on the ability to keep the private key a secret. If someone else obtains access to that secret, that third party can, for instance, illegally sign transactions on behalf of the actual private key owner.

Evidently, the safe storage of a user's private key is of great importance. A common and convenient way of handling secret keys is by saving them on electronic devices, such as a smartphone or a computer. However, since these are typically connected to public networks, such as the internet, they are vulnerable to hacking, phishing scams and other malware, that can lead to sensitive information being stolen. Another way of storing private keys is by simply printing them on a piece of paper, also known as paper wallet. Although this physical way of storage is not susceptible to hacking, it can easily be lost or stolen, and the stored, i.e. printed, information is readily available for anyone in possession of the printout.

Another alternative is storing private keys using external offline devices, such as smart cards that usually come in the shape of a bank card, or a USB-device. This provides the user with the needed security, as these devices are not connected to the internet and the information stored cannot readily be read with the naked eye. Furthermore, particularly smart cards may additionally provide a desired "handiness" of a bank card. Such smart cards may typically be configured to be read out via a card reader allowing the user to access the stored private key for example subject to entering a personal identification number (PIN). Similarly, other offline devices may be accessed through suitable interfaces, e.g. USB-device via USB interface of a computer, and subject to security measures such as a PIN. However, while storing the private key on an external offline device may provide improved security compared to other known methods, particularly the means for accessing the stored key may still be disadvantageous in that a simple one-stage PIN protection may not provide the desired security for a private key. For example, a simple PIN protection may be circumvented with a brute force attack, i.e. trying out all possible combinations.

In light of the above, it is an object to overcome or at least alleviate the shortcomings and disadvantages of the prior art. More particularly, it is an object of the present invention to provide a method and system that allow for improved security of digitally signing data structures.

These objects are met by the present invention.

In a first embodiment, the present invention relates to a method, which may be a method for digitally signing a data structure. The method comprises using a device comprising a private key, transmitting a data element from the user terminal to the device, and in response to receiving the data element, the device encrypting a hash of the data structure by means of the private key and thereby generating a signed data structure hash.

That is, conditional on the data element being transmitted from the user terminal to the device, said device encrypts the hash of the data structure and thereby creates the signed data structure hash, which may also be referred to as digital signature.

The user terminal may comprise the data element. In other words, the data element may for example be stored within the user terminal, e.g. in a memory.

Alternatively, the method may comprise the user terminal receiving the data element from a user. That is, the user may for example provide the data element, e.g. a PIN, password or biometric feature, to the user terminal, e.g. through an input interface such as a keyboard, a touch screen or a sensor for a biometric feature. Thus, in some embodiments the user terminal receiving the data element from the user may comprise the user providing a PIN.

The user terminal may comprise a secure portion. That is, the user terminal may comprise a portion to which access is controlled and for example conditional on user authentication. A secure portion may preferably be provided by means of hardware such as a tamper proof chip comprising a processor, e.g. microprocessor, and a memory. Such tamper proof chips are part of most smartphones by now and provide an extra level of security for anything stored within the tamper proof chip and thus the secure portion of the user terminal.

However, the secure portion may also be software-based instead of hardware-based. That is, the secure portion may in some embodiments be purely implemented by software restricting the access to information comprised by the secure portion, e.g. a software-protected portion of the memory.

Further, the secure portion may comprise the data element. That is, the data element may be stored within the secure portion.

Additionally or alternatively, the secure portion may comprise a user terminal private key. That is, a private key may be stored within the secure portion of the user terminal, which may for example be used to digitally sign or co-sign data structures, particularly to encrypt the hash of a data structure. The private key stored in the secure portion of the user terminal is referred to as the user terminal private key.

Further, the method may comprise the user terminal receiving the data structure. In some embodiments, the user terminal may receive the data structure via an internet connection. In particular, the method may further comprise the user terminal reading a QR code, wherein the user terminal receiving the data structure may be performed in response to the QR code being read. In other words, the user terminal may generally receive the data structure to be signed, for example via an internet connection, i.e. the user terminal may for example download the data structure from the internet. In some embodiments, the user terminal may read a QR code, which may for example provide the internet address, e.g. link, for downloading the respective data structure or directly comprise an encoded form of the data structure itself. This may be particularly convenient for the user as the issuer of the data structure may just provide a QR code, e.g. displayed on a screen, and the user terminal may read the QR code and in response receive, e.g. download, the data structure.

Furthermore, the method may comprise the user terminal determining the hash of the data structure. That is, after receiving the data structure, the user terminal may determine, e.g. calculate, the hash of the data structure based on a cryptographic hash algorithm. A cryptographic hash algorithm or cryptographic hash function may generally map an arbitrarily sized data structure onto a fixed size hash by means of a one-way function. That is, the process may not (or at least not easily) be reversible. Furthermore, the resulting hash may ideally be unique to the message. That is, a different message may ideally always lead to a different hash.

In embodiments wherein the secure portion comprises the user terminal private key, the method may further comprise the user terminal encrypting the hash of the data structure by means of the user terminal private key and thereby generating the data element. In other words, the user terminal may generate a digital signature of the data structure which may constitute the data element for triggering the device encrypting (and thereby signing) the data structure. The encrypted hash, i.e. the data element, may be sent to the device as well as the data structure (or the hash of the data structure), such that the device may identify the correct signature of the data structure by the user terminal. That is, the device may utilize the respective public key corresponding to the user terminal private key and decrypt the data element. The decrypted data element should then fit the hash of the data structure, which the device may either determine as well or receive from the user terminal. That is, the user terminal may send the hash of the data structure instead of the data structure itself. The corresponding public key may for example be deposited in the device during an initial paring of the device and the user terminal.

The data element may be transmitted from the user terminal to the device by means of wireless communication. In other words, the user terminal may transmit the data element to the device via a wireless connection, e.g. Bluetooth, W-LAN, NFC, or any other wireless communication means. In particular, the data element may in some embodiments be transmitted from the user terminal to the device by means of near-field communication (NFC).

The method may further comprise generating a digitally signed data structure comprising the signed data structure hash and the data structure. This may generally allow a receiving party to check if the data structure has been validly signed or if, for example, the data structure has been altered since the signing thereof, since any alteration would lead to a different hash. In other words, the decrypted signed data structure hash and the hash of the data structure itself need to be identical to proof the validity of the signature of that specific data structure. Again, decryption may be performed utilizing a public key corresponding to the private key used for encryption, i.e. the public key of the private/public key pair. In some embodiments, the digitally signed data structure may thus further comprise a public key corresponding to the private key comprised by the device. Further, the digitally signed data structure may comprise a timestamp. The timestamp may indicate when the data structure was signed and may for example be issued by a trusted authority. In other words, the digitally signed data structure may comprise the data structure and the signed data structure hash, i.e. the signature. Furthermore, the digitally signed data structure may for example comprise a timestamp, e.g. issued by a trusted authority and/or the respective public key.

The method may further comprise transmitting at least the signed data structure hash from the device to the user terminal. That is, once the device has generated the signed data structure hash by encrypting the hash of the data structure, it may send the resulting signed data structure hash to the user terminal. In some embodiments, the device may first generate the digitally signed data structure based on the signed data structure hash and then transmit the digitally signed data structure comprising the signed data structure hash. At least the signed data structure hash may be transmitted from the device to the user terminal by means of wireless communication. Preferably, at least the signed data structure hash may be transmitted from the device to the user terminal by means of near-field communication.

The digitally signed data structure may be generated by the user terminal.

The method may further comprise the user terminal sending the digitally signed data structure to at least one further device. In some embodiments, the user terminal may send the digitally signed data structure by means of an internet connection.

The method may comprise the user terminal broadcasting the digitally signed data structure to a blockchain network. For example, the digitally signed data structure may correspond to a transaction (e.g. a block) which may be broadcasted to the blockchain network for approval through other network nodes upon which it may be entered to the block chain.

The method may further comprise the device receiving the data structure or the respective hash of the data structure before digitally signing it. In some embodiments, the device may receive the data structure or the hash of the data structure from the user terminal, preferably by means of wireless communication. That is, the device may generally either receive the data structure and subsequently calculate the hash of the data structure or it may directly receive the hash of data structure. The latter may provide the advantage of transmitting less data to the device, e.g. from the user terminal, and furthermore, a transmitting device, e.g. user terminal, may generally comprise more power for calculating the hash than the device receiving it. Thus, for example the user terminal may determine, e.g. calculate the hash of the data structure and transmit it to the device, preferably by means of a wireless communication. Again, the size of the hash may advantageously usually be smaller than the data structure (depending on the actual size of the data structure and the size of the hash set by the algorithm used), such that less data may need to be transmitted/received.

The device may receive the data structure or the hash of the data structure by means of near-field communication. Near-field communication may generally advantageously require the user terminal and the device, i.e. the transmitting and receiving devices, to be in close proximity, while not requiring any wiring. Thus, the user is required to have both the user terminal and the device close by, which may reduce the risk of fraudulent use.

The method may further comprise the device determining the hash of the data structure if receiving the data structure. That is, provided that the device is receiving the data structure, e.g. from the user terminal, it may determine, e.g. calculate, the hash.

The device may comprise a secure section and wherein the secure section comprises the private key. Further, encrypting the hash of the data structure may be performed within the secure section. The device may comprise a chip, wherein the chip comprises the secure section. Furthermore, access to the secure section may be conditional upon receiving the data element. That is, the device may for example comprise a tamper proof chip, comprising a processor and a memory comprising the private key. Access to the secure section may only be granted on successful authentication, e.g. by providing the data element. That is, the processor comprised by the tamper proof chip and thus the secure section may be configured for encrypting the hash of the data structure by means of the private key also stored in the secure section. This may advantageously allow for encrypting the hash of the data structure, i.e. generating the digital signature, within the secure section. Thus, the private key may advantageously not be revealed outside the secure section.

The device may be a card. For example, the device may be a smart card, which may advantageously comprise dimensions similar to a credit card.

The method may further comprise authentication performed by the user terminal, wherein the data element may be transmitted from the user terminal to the device in response to a successful authentication. That is, transmitting the data element from the user terminal to the device may be conditional on successful authentication of the user. The authentication may comprises using a biometric feature or a password. For example, authentication may comprise providing a finger print, a facial or retina scan, or a password, e.g. a simple PIN.

In some embodiments, the private key may be a blockchain private key. That is, the private key may be based on any asymmetric key encryption scheme providing a signature, e.g. Schnorr, elliptic curve digital signature algorithm (ECDSA), Rivest-Shamir-Adleman (RSA), etc. In particular, the private key may be based on an asymmetric key encryption scheme using ECDSA on 256 K1 or R1 curves, e.g. secp256k1 in combination with the ECDSA algorithm.

The data structure may be indicative for a transaction.

The user terminal may be a smartphone.

The data structure may be a smart contract command, interaction, action or transaction. That is, the data structure may be a smart contract or any respective item related to a smart contract.

The method may further comprise displaying the data structure on the user terminal prior to the device receiving the data structure or the hash of the data structure. Furthermore, the device receiving the data structure or the hash of the data structure may be conditional on verification of the displayed data structure on the user terminal. That is, the data structure may be displayed to the user on the user terminal in an easily readable fashion, such that the user may check and approve the data structure to be signed to actually correspond to the item, e.g. transaction or smart contract interaction, the user intends to sign. The user may indicate that the displayed data structure meets his approval, e.g. by pressing a (virtual) button. Thus, the user may verify the data structure prior to sending it to the device.

The method may further comprise establishing a secure encrypted channel between the device and the user terminal. In particular, the secure encrypted channel may be established by means of symmetric key cryptography. That is, the device and the user terminal may share a secret, e.g. an AES key, which may have been provided to (e.g. distributed among) the device and the user terminal during an initial pairing thereof. Thus, the device and the user terminal may both use the shared secret to encrypt and decrypt any messages sent between the two devices.

In another embodiment, the present invention relates to a system. The system may be for digitally signing a data structure. The system comprises a device comprising a private key and a communication interface, configured for exchanging data with external devices, and a user terminal comprising a communication module, configured for exchanging data with external devices.

The system may be configured to perform the method outlined above.

The user terminal may comprise a data element. Alternatively, the user terminal may be configured to receive the data element from a user. For example, the user may enter a PIN or provide a biometric feature to the user terminal, which may constitute the data element.

The user terminal may comprise a secure portion. That is, the user terminal may comprise a hardware- or software-based secure portion, e.g. a tamper proof chip that is separate from a processor generally running the user terminal. The secure portion may comprise the data element. Alternatively, the secure portion comprises a user terminal private key.

The device may comprise a secure section, wherein the secure section comprises the private key. That is, the device may comprise a hardware based secure section, e.g. a tamper proof chip comprising a processor and a memory. Further, access to the secure section is conditional upon provision of the data element. That is, access may to the secure section may only be granted if the correct data element is transmitted.

The communication interface may comprise electrical contacts for enabling wired connection with the device. Further, the communication interface may comprise a socket for providing the electrical contacts. Additionally or alternatively, the communication interface may comprise contact pads on an outer surface of the device for providing the electrical contacts.

The communication interface may be configured for wireless communication. Preferably, the communication interface may be configured for near-field communication (NFC).

The device may be configured for encrypting a hash of the data structure by means of the private key and thereby generating a signed data structure hash. The device may be configured for encrypting the hash of the data structure in the secure section. For example, the device may comprise a processor within the secure section which is configured for encrypting the hash of the data structure by means of the private key to thereby generate the signed data structure, i.e. a digital signature.

The device may be configured to determine the hash of the data structure. That is, the device may be configured to determine, e.g. calculate, the hash of the data structure for example based on a cryptographic hash function.

Additionally or alternatively, the user terminal may be configured to determine the hash of the data structure. In some embodiments, the user terminal may be configured to encrypt the hash of the data structure by means of the user terminal private key and to thereby generate the data element.

At least one of the user terminal and the device may be configured to generate a digitally signed data structure comprising the signed data structure hash and the data structure. The digitally signed data structure may comprise a public key corresponding to the private key comprised by the device. Additionally or alternatively, the digitally signed data structure may comprise a timestamp, e.g. issued by a trusted authority. In some embodiments, the user terminal may be configured to generate the digitally signed data structure.

The device may be portable. For example, the device may be a card.

The device may comprise a chip. In some embodiments, the chip may comprise the secure section. Generally, the chip may comprise the communication interface.

The chip may comprise an electrically erasable programmable read-only memory (EEPROM). Further, the secure section may comprise the EEPROM.

The chip may comprise a microprocessor. Further, access to the secure section may be provided through the microprocessor. The microprocessor may be configured for encrypting the hash of the data structure. The secure section may comprise the microprocessor. Additionally or alternatively, the microprocessor may be configured to determine the hash of the data structure.

Access to the secure portion of the user terminal may be conditional upon successful authentication. Further, authentication may comprise using a password and/or a biometric feature.

The communication module may comprise electrical contacts for enabling wired connection with the user terminal. Further, the communication module may comprise a socket for providing the electrical contacts. Additionally or alternatively, the communication module may comprise electrical contacts configured for establishing an electrical connection to contact pads.

The communication module may be configured for wireless communication. Preferably, the communication module may be configured for near-field communication (NFC). Further, The communication module may be configured for establishing an internet connection.

The user terminal may be one of a handheld device, a portable computer, and a desktop computer. Further, the user terminal may be a smartphone or tablet. That is, the handheld device may for example be a smartphone or tablet.

The user terminal may comprise a fingerprint sensor. Additionally or alternatively, the user terminal may comprise a camera. Further, the camera may be configured to provide biometric data corresponding to a biometric feature of the user. Further, the user terminal may be configured to scan a QR-code.

The user terminal may comprise a visual interface for displaying information. That is, the user terminal may for example comprise a screen configured for displaying information, e.g. a touch screen.

The user terminal may be configured for receiving a user input. For example, the user may verify a data structure or provide a data element by providing corresponding user input to the user terminal. User input may for example be provided by means of a touch screen and/or a keyboard.

The user terminal and the device may be configured to establish a secure encrypted channel in between them. In particular, the device maybe configured for communicating utilizing symmetric key cryptography. Furthermore, the device may comprise a shared secret. Similarly, the user terminal may be configured for communicating utilizing symmetric key cryptography. Further, the user terminal may comprise a shared secret. That is, the user terminal and the device may generally be configured to communicate via a secure encrypted channel, that is in particular the communication interface and the communication module may be configured for utilizing symmetric key cryptography. The shared secret may for example be an AES key.

The method as outline above may comprise using a system according to the precedingly described system.

Below, reference will be made to method embodiments. These embodiments are abbreviated by the letter "M" followed by a number. Whenever reference is herein made to "method embodiments", these embodiments are meant.

M1. A method,
wherein the method comprises
using a device comprising a private key;
transmitting a data element from the user terminal to the device; and
in response to receiving the data element, the device encrypting a hash of a data structure by means of the private key and thereby generating a signed data structure hash.

M2. The method according to the preceding method embodiment, wherein the user terminal comprises the data element.

M3. The method according to the penultimate method embodiment, wherein the method comprises the user terminal receiving the data element from a user.

M4. The method according to the preceding method embodiment, wherein the user terminal receiving the data element from the user comprises the user providing a PIN.

M5. The method according to any of the preceding method embodiments, wherein the user terminal comprises a secure portion.

M6. The method according to the preceding embodiment, wherein the secure portion comprises the data element.

M7. The method according to any of the 2 preceding method embodiments, wherein the secure portion comprises a user terminal private key.

M8. The method according to any of the preceding method embodiments, wherein the method comprises the user terminal receiving the data structure.

M9. The method according to the preceding method embodiment, wherein the user terminal receives the data structure via an internet connection.

M10. The method according to any of the preceding 2 method embodiments, wherein the method further comprises the user terminal reading a QR code, and wherein the user terminal receiving the data structure is performed in response to the QR code being read.

M11. The method according to any of the 3 preceding method embodiments, wherein the method comprises the user terminal determining the hash of the data structure.

M12. The method according to the preceding method embodiment and with the features of method embodiment M7, wherein the method comprises the user terminal encrypting the hash of the data structure by means of the user terminal private key and thereby generating the data element.

M13. The method according to any of the preceding method embodiments, wherein the data element is transmitted from the user terminal to the device by means of wireless communication.

M14. The method according to the preceding method embodiment, wherein the data element is transmitted from the user terminal to the device by means of near-field communication.

M15. The method according to any of the preceding method embodiments, wherein the method further comprises generating a digitally signed data structure comprising the signed data structure hash and the data structure.

M16. The method according to the preceding method embodiment, wherein the digitally signed data structure further comprises a public key corresponding to the private key comprised by the device.

M17. The method according to any of the 2 preceding method embodiments, wherein the digitally signed data structure further comprises a timestamp.

M18. The method according to any of the preceding method embodiments, wherein the method further comprises transmitting at least the signed data structure hash from the device to the user terminal.

M19. The method according to the preceding embodiment, wherein at least the signed data structure hash is transmitted from the device to the user terminal by means of wireless communication.

M20. The method according to the preceding method embodiment, wherein at least the signed data structure hash is transmitted from the device to the user terminal by means of near-field communication.

M21. The method according to any of the 3 preceding method embodiments and with the features of method embodiment M15, wherein the digitally signed data structure is generated by the user terminal.

M22. The method according to any of the 4 preceding method embodiments and with the features of method embodiment M15, wherein the method further comprises the user terminal sending the digitally signed data structure to at least one further device.

M23. The method according to the preceding method embodiment, wherein the user terminal sends the digitally signed data structure by means of an internet connection.

M24. The method according to any of the 6 preceding method embodiments and with the features of method embodiment M15, wherein the method comprises the user terminal broadcasting the digitally signed data structure to a blockchain network.

M25. The method according to any of the preceding method embodiments, wherein the method further comprises the device receiving the data structure or the respective hash of the data structure before digitally signing it.

M26. The method according to the preceding method embodiment, wherein the device receives the data structure or the hash of the data structure from the user terminal, preferably by means of wireless communication.

M27. The method according to the preceding method embodiment, wherein the device receives the data structure or the hash of the data structure by means of near-field communication.

M28. The method according to any of the 3 preceding method embodiments, wherein the method further comprises the device determining the hash of the data structure if receiving the data structure.

M29. The method according to any of the preceding method embodiments, wherein the device comprises a secure section and wherein the secure section comprises the private key.

M30. The method according to the preceding method embodiment, wherein encrypting the hash of the data structure is performed in the secure section.

M31. The method according to any of the 2 preceding method embodiments, wherein the device comprises a chip, wherein the chip comprises the secure section.

M32. The method according to any of the 3 preceding method embodiments, wherein access to the secure section is conditional upon receiving the data element.

M33. The method according to the any of the preceding method embodiments, wherein the device is a card.

M34. The method according to any of the preceding method embodiments, wherein the method further comprises authentication performed by the user terminal, wherein the data element is transmitted from the user terminal to the device in response to a successful authentication.

M35. The method according to the preceding method embodiment, wherein the authentication comprises using a biometric feature or a password.

M36. The method according to any of the preceding method embodiments, wherein the private key is a blockchain private key.

M37. The method according to any of the preceding method embodiments, wherein the data structure is indicative for a transaction.

M38. The method according to any of the preceding method embodiments, wherein the user terminal is a smartphone.

M39. The method according to any of the preceding method embodiments, wherein the data structure is a smart contract command, interaction, action or transaction.

M40. The method according to any of the preceding method embodiments and with the features of M26, wherein the method further comprises displaying the data structure on the user terminal prior to the device receiving the data structure or the hash of the data structure.

M41. The method according to the preceding method embodiment, wherein the device receiving the data structure or the hash of the data structure is conditional on verification of the displayed data structure on the user terminal.

M42. The method according to any of the preceding method embodiments, wherein the method further comprises establishing a secure encrypted channel between the device and the user terminal.

M43. The method according to the preceding method embodiment, wherein the secure encrypted channel is established by means of symmetric key cryptography.

M44. The method according to any of the preceding embodiments, wherein the method is a method for digitally signing a data structure.

Below, reference will be made to system embodiments. These embodiments are abbreviated by the letter "S" followed by a number. Whenever reference is herein made to "system embodiments", these embodiments are meant.

S1. A system comprising
a device comprising a private key and a communication interface, configured for exchanging data with external devices, and
a user terminal comprising a communication module, configured for exchanging data with external devices.

S2. The system according to the preceding system embodiment, wherein the system is configured to perform the method according to any of the preceding method embodiments.

S3. The system according to any of the preceding system embodiments, wherein the user terminal comprises a data element.

S4. The system according to system embodiments S1 or S2, wherein the user terminal is configured to receive the data element from a user.

S5. The system according to any of the preceding system embodiments, wherein the user terminal comprises a secure portion.

S6. The system according to the preceding system embodiment, wherein the secure portion comprises the data element.

S7. The system according to the penultimate system embodiment, wherein the secure portion comprises a user terminal private key.

S8. The system according to any of the preceding system embodiments, wherein the device comprises a secure section and wherein the secure section comprises the private key.

S9. The system according to the preceding system embodiment, wherein access to the secure section is conditional upon provision of the data element.

S10. The system according to any of the preceding system embodiments, wherein the communication interface comprises electrical contacts for enabling wired connection with the device.

S11. The system according to the preceding system embodiment, wherein the communication interface comprises a socket for providing the electrical contacts.

S12. The system according to any of the 2 preceding system embodiments, wherein the communication interface comprises contact pads on an outer surface of the device for providing the electrical contacts.

S13. The system according to any of the preceding system embodiments, wherein the communication interface is configured for wireless communication.

S14. The system according to the preceding system embodiment, wherein the communication interface is configured for near-field communication (NFC).

S15. The system according to any of the preceding system embodiments, wherein the device is configured for encrypting a hash of the data structure by means of the private key and thereby generating a signed data structure hash.

S16. The system according to the preceding system embodiment and with the features of embodiment S8, wherein the device is configured for encrypting the hash of the data structure within the secure section.

S17. The system according to any of the preceding system embodiments, wherein the device is configured to determine the hash of the data structure.

S18. The system according to any of the preceding system embodiments, wherein the user terminal is configured to determine the hash of the data structure.

S19. The system according to the preceding system embodiment and with the features of system embodiment S7, wherein the user terminal is configured to encrypt the hash of the data structure by means of the user terminal private key and to thereby generate the data element.

S20. The system according to any of the preceding system embodiments and with the features of S15, wherein at least one of the user terminal and the device is configured to generate a digitally signed data structure comprising the signed data structure hash and the data structure.

S21. The system according to the preceding system embodiment, wherein the digitally signed data structure comprises a public key corresponding to the private key comprised by the device.

S22. The system according to any of the 2 preceding system embodiments, wherein the digitally signed data structure further comprises a timestamp.

S23. The system according to any of the 3 preceding system embodiments, wherein the user terminal is configured to generate the digitally signed data structure.

S24. The system according to any of the preceding system embodiments, wherein the device is portable.

S25. The system according to any of the preceding system embodiments, wherein the device comprises a chip.

S26. The system according to the preceding system embodiment and with the features of S8, wherein the chip comprises the secure section.

S27. The system according to any of the 2 preceding system embodiments, wherein the chip comprises the communication interface.

S28. The system according to any of the 3 preceding system embodiments, wherein the chip comprises an electrically erasable programmable read-only memory (EEPROM).

S29. The system according to the preceding system embodiment, wherein the secure section comprises the EEPROM.

S30. The system according to any of the 5 preceding system embodiments, wherein the chip comprises a microprocessor.

S31. The system according to the preceding system embodiment, wherein access to the secure section is provided through the microprocessor.

S32. The system according to any of the 2 preceding system embodiments and with the features of embodiment S15, wherein the microprocessor is configured for encrypting the hash of the data structure.

S33. The system according to any of the 3 preceding system embodiments, wherein the secure section comprises the microprocessor.

S34. The system according to any of the 4 preceding system embodiments and with the features of S17, wherein the microprocessor is configured to determine the hash of the data structure.

S35. The system according to any of the preceding system embodiments and with the features of S25, wherein the device is a card.

S36. The system according to any of the preceding system embodiments, wherein access to the secure portion of the user terminal is conditional upon successful authentication.

S37. The system according to the preceding system embodiment, wherein authentication comprises using a password and/or a biometric feature.

S38. The system according to any of the preceding system embodiments, wherein the communication module comprises electrical contacts for enabling wired connection with the user terminal.

S39. The system according to the preceding system embodiment, wherein the communication module comprises a socket for providing the electrical contacts.

S40. The system according to any of the 2 preceding embodiments, wherein the communication module comprises electrical contacts configured for establishing an electrical connection to contact pads.

S41. The system according to any of the preceding system embodiments, wherein the communication module is configured for wireless communication.

S42. The system according to the preceding system embodiment, wherein the communication module is configured for near-field communication (NFC).

S43. The system according to any of the preceding system embodiments, wherein the user terminal is one of
a handheld device,
a portable computer, and
a desktop computer.

S44. The system according to the preceding system embodiment wherein the user terminal is a smartphone or tablet.

S45. The system according to any of the preceding system embodiments, wherein the user terminal comprises a fingerprint sensor.

S46. The system according to any of the preceding system embodiments, wherein the user terminal comprises a camera.

S47. The system according to the preceding system embodiment, wherein the camera is configured to provide biometric data corresponding to a biometric feature of the user.

S48. The system according to any of the 2 preceding system embodiments, wherein the user terminal is configured to scan a QR-code.

S49. The system according to any of the preceding system embodiments, wherein the user terminal comprises a visual interface for displaying information.

S50. The system according to any of the preceding system embodiments, wherein the communication module is configured for establishing an internet connection.

S51. The system according to any of the preceding system embodiments, wherein the user terminal is configured for receiving a user input.

S52. The system according to any of the preceding system embodiments, wherein the user terminal and the device are configured to establish a secure encrypted channel in between them.

S53. The system according to any of the preceding system embodiments, wherein the device is configured for communicating utilizing symmetric key cryptography.

S54 The system according to the preceding system embodiment, wherein the device comprises a shared secret.

S55. The system according to any of the preceding system embodiments, wherein the user terminal is configured for communicating utilizing symmetric key cryptography.

S56. The system according to the preceding system embodiment, wherein the user terminal comprises a shared secret.

S57. The system according to any of the preceding system embodiments, wherein the system is a system for digitally signing a data structure.

M45. The method according to any of the preceding method embodiments, wherein the method comprises using a system according to any of the preceding system embodiments.

Embodiments of the present invention will now be described with reference to the accompanying drawings. These embodiments should only exemplify, but not limit, the present invention.
Fig. 1 depicts a system for digitally signing a data structure;
Fig. 2 depicts an embodiment of a method for digitally signing a data structure;
Fig. 3 depicts a further embodiment for digitally signing a data structure; and
Fig. 4 depicts steps of a method for digitally signing a data structure according to the embodiment shown in Fig. 3.

It is noted that not all the drawings carry all the reference signs. Instead, in some of the drawings, some of the reference sings have been omitted for the sake of brevity and simplicity of the illustration. Embodiments of the present invention will now be described with reference to the accompanying drawings.

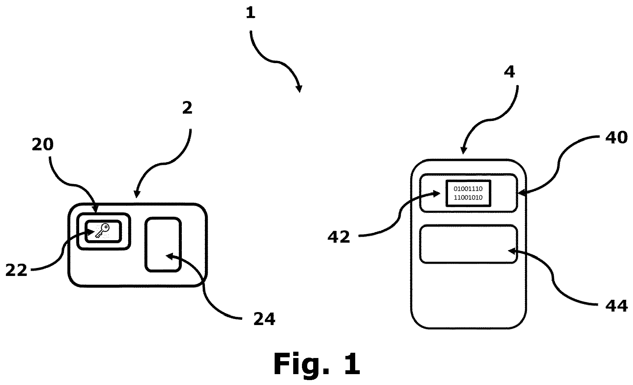

With reference to Fig. 1, exemplary components of a system 1 for digitally signing a data structure are described. Very generally, the system 1 may comprise a device 2 and a user terminal 4. Further, such a system 1 may generally be configured to perform a method for digitally signing a data structure according to the present invention.

The device 2 may comprise a secure section 20, which may for example only be accessed subject to provision of a data element. Such a data element may for example be a cryptographic secret (also referred to as cryptographic key) recognized by the secure section 20 or the co-signed data structure. However, the secure section 20 of device 2 could also be accessed by a simple PIN transmitted from the user terminal 4 to the device 2. Thus, the device 2 may comprise a control to the secure section 20, e.g. by some built-in logic. Said access control may restrict access for reading and/or writing to the secure section 20

Within the secure section 20, a private key 22 of a private-public-key pair used for asymmetric cryptography may be stored. Said private key 22 may for example be utilized to digitally sign data structures, such as smart contracts interactions, or digital documents. In particular, said private key may be utilized to encrypt the hash of a data structure, e.g. a smart contract (interaction), and thereby generating a signed data structure hash, e.g. a digital signature.

That is, the private key 22 may be comprised by, e.g. stored on, a device 2 which may be configured to only provide access to a signing functionality utilizing the private key 22 upon receiving a data element 42, such as a PIN or a co-signed data structure, e.g., an encrypted hash of a data structure.

Furthermore, the device 2 may comprise a communication interface 24, configured for a data exchange with external devices. The communication interface 24 of the device 2 may for example provide means for establishing a wired, electrical connections to the device 2. Such connections may be realised through a standard socket, e.g. a USB socket, or by providing electrical contact pads on an outer surface of the device 2, which may be configured to be contacted by means of a respective receiving interface, e.g., through electrical contact pins.

Additionally or alternatively, the communication interface 24 may be configured for wireless communication with other devices. That is, the communication interface 24 may for example comprise a respective antenna for sending and receiving data from another device. Generally, the communication interface 24 may be configured for wireless communication via Bluetooth, radio-frequency identification (RFID), Wi-Fi and/or other standards for wireless communication. In particular, the communication interface 24 may be configured for near-field communication (NFC), which is typically limited to short distances, e.g. 10 cm or less, and may operate at a frequency of 13.56 MHz. In other words, the device 2 may transmit and receive data via wireless communication, for example via NFC.

The device 2 may for example comprise a chip, such as a (tamper proof) microchip. The chip may comprise an electrically erasable programmable read-only memory (EEPROM) and in some instances a microprocessor. For example, the private key 22 may be stored in the EEPROM of the microchip, which may only be accessible through the microprocessor and subject to an authentication based on a cryptographic method. For example, the access to the private key 22 on the EEPROM may be subject to the provision of a cryptographic key or PIN (i.e. a data element 42). Thus, the secure section 20 of the device 2 may comprise at least a portion of the EEPROM with restricted access. In some embodiments, access to the EEPROM may be generally restricted, such that the entire EEPROM may be comprised by the secure section 20. In general, the secure section 20 may also provide cryptographic computing functionality with a processor configured to perform a digital signature within itself, utilizing the private key 22. Thus, the secure section 20 may in some embodiments comprise the EEPROM and the microprocessor. The secure section 20 may also be referred to as secure enclave 20 of the device 2. In some embodiments the device 2 may be a card comprising a chip, such as a smart card. A smart card may for example resemble the shape of a credit card.

Preferably, the device 2 may comprise a tamper proof chip comprising a memory and a processor which may constitute the secure section 20. Such a tamper proof chip may advantageously provide a protection against brute force attacks, particularly when being protected by a PIN. That is, similar to a credit card, the device 2 may for example allow only a limited number of attempts as regards its PIN before it may block access to the chip or alternatively self-destruct. Utilizing a PIN may be particularly user-friendly as it only requires memorizing a few numbers, e.g. 4 digits, whereas a device without a tamper proof chip would require a much longer PIN (or password) to ensure security of the access control, e.g. sufficient security against brute force attacks.

Furthermore, such a tamper proof chip may advantageously allow to perform the digital signature in a secret way. That is, it may be impossible to detect and/or infer what happens within the tamper proof chip. In other words, the card may be resistant to so-called side channel attacks. These advantages of a tamper proof chip may for example (amongst others) differentiate the present device 2 over a simple USB stick.

Furthermore, the device 2 may be configured for digitally signing a data structure by means of the private key 22. More generally, the device 2 may be configured for encrypting the hash of a data structure, which may correspond to a digital signature. For example, a hash algorithm may be used to create a hash of the data structure which is subsequently encrypted with the private key 22, resulting in the digital signature for the respective data structure. That is, the digitally signed document may be a hash of the document encrypted by the private key 22 alongside the original data structure. In some embodiments, user terminal 4 may calculate the hash of data structure 80 prior to communicating with device 2, and simply send the hash of the data structure 80 for signature/encryption by device 2. That is, the hash of the data structure may be calculated on a device different to device 2, while the actual signing of the data structure, i.e. the encryption of the hash of the data structure, may be performed by the device 2. The signature may typically also be marked with the time and date at which the data structure was signed, e.g. by means of a timestamp issued by a trusted authority. Subsequently anyone receiving the signed data structure can easily verify the signature and that the data structure has not been altered since signing by using the hash function to generate a hash of the data structure and the public key decrypt the hash comprised in the signature. If the two resulting hashes match, the data structure has not been altered since signing thereof and the signature is verified. Thus, such a digital signature may proof authenticity and integrity of the signed data structure.

Therefore, the secure section 20 of the device 2 may typically comprise a microprocessor, such as a crypto processor, configured for digitally signing a data structure using the private key 22 comprised by the device 2. In other words, the secure section 20 of the chip may be configured to encrypt the hash of a data structure with the private key stored within the secure section 20. That is, the secure section 20 of the device 2 may be a fully functional microcontroller, which may include a crypto processor. In particular, upon receiving the data element 42 authorizing access to the secure section 20 and thus the private key 22, a data structure may be signed. It will be understood that signing of a data structure refers to encrypting the hash of the data structure to be signed with the private key 22. That is, whenever it is said that the data structure may be signed, this may refer to encrypting the hashed data structure (i.e., the hash of the data structure) with the respective private key 22, wherein the process of hashing (i.e. creating the hash of) the data structure may in some embodiments be performed by a different device, e.g. the user terminal 4.

It will be understood that components of the device 2 may also be distributed across multiple chips. That is the device 2 may for example comprise one chip comprising an EEPROM and one chip comprising a microprocessor. Additionally, the communication interface 24 may be located on the chip or on a separate, connected chip.

The user terminal 4 may for example be a laptop, a desktop computer, or a handheld device, such as a smartphone or tablet. In some embodiments, the user terminal 4 may be a handheld device, which may advantageously be easily portable. For example, the user terminal 4 may be a smartphone.

The user terminal 4 may in some embodiments comprises a secure portion 40 to which access may be protected by means of authentication. That is, access to the secure portion 40 (which may also be referred to as secure enclave 40 of the user terminal 4) may only be granted upon successful authentication, which may for example require entering a password or submission of a biometric feature, such as a finger print, or a face or iris scan. Thus, access to the secure portion 40 of the user terminal 4 may only be granted to successfully authenticated users. Similar to the device 2, the secure portion 40 of the user terminal 4 may be a tamper proof chip as described above. Such tamper proof chips may for example already be included in smartphones in addition to the normal CPU for running standard operations, e.g. applications (Apps) on the smartphone. However, the secure portion 40 may also be software based, e.g. application software based, and does not necessarily require a secure portion provided by the hardware of the user device 4.

Within the secure portion 40 of the user terminal 4, a data element 42 may be stored, in some embodiments. The data element 42 may for example be a password or a PIN, such as the one required to access the secure section 20 of the device 2. Alternatively, the data element 42 may be comprised by the terminal 4 without being located in a secure portion 40, e.g. if the user terminal 4 does not comprise a secure portion 40.

Alternatively, the secure portion 40 may for example comprise a user terminal private key, which may be utilized to encrypt a hash of the data structure which may in turn constitute the data element 42. That is, the user terminal may comprise the user terminal private key while the device 2 may comprise a respective public key, e.g. through an initial pairing with the user terminal 4. Thus, the device 2, upon receiving the hash of the data structure encrypted with the user terminal private key as well as the data structure itself or the hash of the data structure, may verify the correct signature and therefore provide access to the secure section 20 and the signing functionality. In other words, the user terminal 4 may co-sign the data structure to provide the data element 42. Preferably, the data structure may be co-signed within the secure portion 40, or in other words the hash of the data structure may be encrypted within the secure portion 40.

In some embodiments, the data element 42 may only be provided by the user terminal 4, for example by asking the user to enter a PIN, i.e. a data element 42, which may then be transmitted to the device 2 for accessing the secure section 20 of the device 2. That is, a PIN, password or biometric feature provided by the user to the user terminal may constitute the data element 42.

In other words, there may be different possibilities for access control to the secure portion 20 of the device and particularly the comprised private key 22. First of all, access control may for example be subject to the provision of a PIN through the user terminal 4. That is, the data element 42 may be a PIN. The PIN may either be stored in the user terminal, e.g. in the secure section 40 thereof, or, for example, be entered into the user terminal by a user when access to the secure portion 20 is required. Such a configuration may be very user friendly, as the user may only require a PIN, e.g. a 4-digit code, which may be easily memorable. Further, access to the secure section may for example be controlled through a tamper proof chip, which may for example block access or self-destruct upon provision of 3 wrong PINs in order to prevent brute-force attacks.

Thus, another possibility for access control may be the user terminal co-signing the data structure as described above, which provides a two-factor authentication. That is, the user terminal 4 may comprise a user terminal private key, preferably stored within the secure section 40 of the user terminal 4, which may have been registered with the device 2 during an initial pairing of the user terminal 4 and the device 2. The user terminal 4 may use the user terminal private key to encrypt the hash of the data structure, which may be determined by the user terminal 4 based on the data structure and a respective cryptographic hash function. Said encrypted hash of the data structure (also referred to as co-signed data structure) may provide the data element 42 which is transmitted to the device 2. Additionally, the data structure itself or the hash thereof may be transmitted to the device, such that it may verify the validity of the data element by means of the respective public key. This may advantageously allow for a full two-factor authentication, as access to the secure section 40 of the user terminal 4 and the correct private key are required to gain access to the secure portion 20 of the device 2.

Security may be improved even further by establishing a secure encrypted channel between device 2 and user terminal 4. This may be achieved by means of a shared secret, e.g. an AES key, in addition to the data element 42. Again, the shared secret may for example have been registered with the device 2 and the user terminal 4 during an initial paring of the device 2 and the suer terminal 4.

Furthermore, the user terminal 4 may also comprise a communication module 44 configured for wired and/or wireless communication with other devices and/or components. The communication module 44 may for example comprise a standardized wired connector, such as a USB-socket, which may allow communication via a respective cable. In some embodiments, the communication module 44 may comprise means for establishing a connection to contact pads. For example, the communication module 44 may comprise a card reader configured to communicate with smart cards comprising contact pads for establishing a wired connection, e.g. through respective contact pins.

Additionally or alternatively, the communication module 44 may be configured for establishing a wireless connection to an external device. That is, the communication module 44 may be configured to transmit and receive data via a wireless connection to an external device. For example, the communication module 44 may also be configured for wireless communication via Bluetooth, radio-frequency identification (RFID), Wi-Fi and/or other standards for wireless communication. In some embodiments, the communication module 44 may preferably be configured for near-field communication (NFC), which is limited to short-range communication. This may be advantageous in terms of security since close proximity of devices is required for communication therebetween, which may reduce the risk of unnoticed attempts to access the user terminal 4 (or similarly the device 2).

In some embodiments both the communication module 44 and the communication interface 24 may be configured to communicate via a secure encrypted channel. Preferably, the device 2 and the user terminal 4 and particularly the communication module 44 and the communication interface 24 may be configured for symmetric key cryptography. Thus, the device 2 and the user terminal 4 may each comprise a shared secret, such as an AES key.

Utilizing a system as depicted in Fig. 1, a method according to the present invention may be implemented, e.g. a method for digitally signing a data structure. The method according to an embodiment of the present invention may comprise using the device 2 comprising the private key 22 and transmitting a data element 42 from the user terminal 4 to the device 2.In response to receiving the data element 42, the device may digitally sign a data structure 80 by means of the private key 22, i.e., the device 2 may encrypt the hash of the data structure 80 with the private key 22.

The data element 42 may for example be comprised by the user terminal, or provided by the user terminal, e.g. based on a user input. Furthermore, the user terminal 4 may comprise a secure portion 40, wherein the secure portion 40 may comprises a data element 42.

Very generally, access to the secure portion 20 of the device 2 and particularly the private key 22 and the signing functionality may be possible in different forms, depending on the embodiment.

In a basic implementation of the present invention, a PIN may be provided to the user terminal 4 and transmitted to the device 2 for gaining access to the secure portion 20 thereof. That is, the user terminal 4 providing the data element 42 may for example refer to the PIN being stored on the user terminal 4, e.g. in some embodiments in a secure portion 40 thereof, or the user terminal 4 prompting the user to enter the PIN into the user terminal 4.

Thus, the user terminal 4 may comprise a secure portion 40 providing the data element 42. For example, the secure portion 40 may comprise the data element 42 which is transmitted to the device 2 for gaining access to the secure portion and the signing functionality. However, alternatively the secure portion 40 may comprise a user terminal private key which may be utilized to sign, e.g. co-sign, the data structure to provide the data element. That is, the data element 42 may be the hash of the data structure 80 encrypted with the user terminal private key. In other words, instead of providing a PIN, a hash of the data structure 80 encrypted with the user terminal private key may constitute the data element 42 transmitted to the device 2. Furthermore, the data structure 80 or a (unsigned) hash of the data structure may be transmitted to the device 2, such that the device 2 may verify that the encrypted hash of the data structure 80 constituting the data element 42 has been encrypted by the private key comprised by the secure portion 40 of the user terminal 4. The verification may be performed based on a corresponding public key, e.g. shared during an initial pairing of the device 2 and the user terminal 4. This verification may serve as authentication for accessing the secure portion 20 of the device 2, as it may prove that the data element 42 was transmitted by the user terminal 4 holding the user terminal private key.

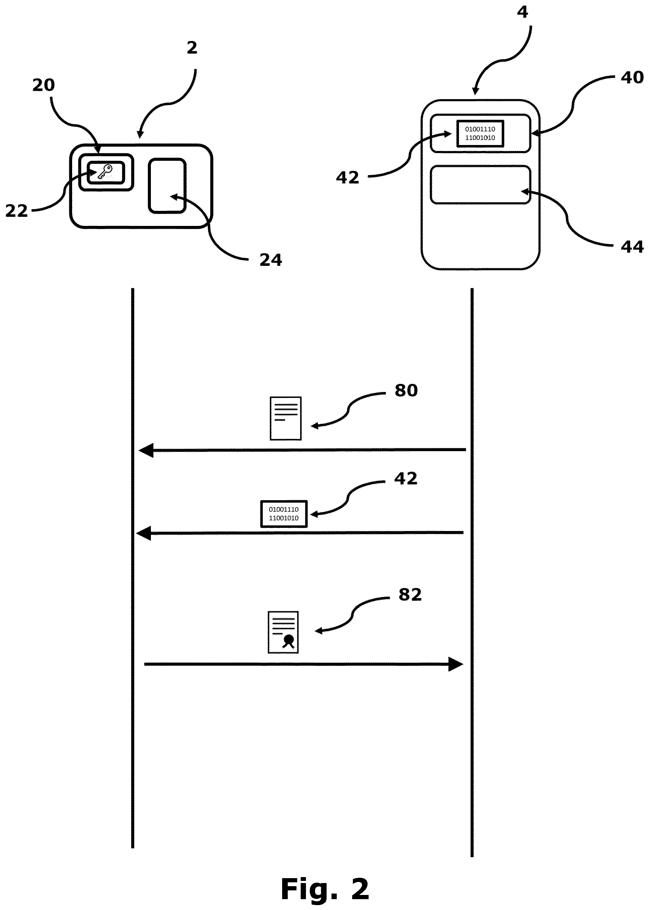

An exemplary embodiment of such a method is depicted in Fig. 2. The method uses a device 2 and a user terminal 4 comprising at least some of the features previously described. In particular, the user terminal 4 comprises a secure portion 40 comprising a data element 42 and a communication module 44 configured for communicating with external devices such as the device 2. Furthermore, the device 2 comprises a private key 22 and a communication interface 24 for communicating with external devices such as the user terminal 4.

A data structure 80 to be signed may be transmitted to the device 2, which comprises the private key 22 and may be configured for encrypting a hash of the data structure 80 by means of the private key 22, i.e. signing the data structure 80.

While Fig. 2 depicts that the complete data structure 80 to be signed is sent to the device 2, it should be understood that other implementations are also possible. For example, the user terminal 4 may first determine, e.g. calculate, the hash of the data structure and subsequently only transmit the hash of the data structure 80. That is, the device 2 may receive the data structure 80, or a hash of the data structure 80, for example from the user terminal 4 and preferably by means of wireless communication. Furthermore, the user terminal 4 may transmit the data element 42 stored in the secure portion 40 of the user terminal 4 to the device 2. The method may also comprise authentication of the user of the user terminal 4 in order to gain access to the secure portion 40 of the user terminal 4 prior to transmitting the data element 42 to the device 2. Such an authentication step may for example include entering a password, e.g. a PIN, and/or providing a biometric feature, e.g. fingerprint and/or a face or iris scan.

However, the data element 42 may alternatively also be provided in different ways as discussed above. That is, it may for example be a PIN provided by the user to the user terminal 4 or the co-signed data structure, i.e. the encrypted hash of the data structure, wherein a user terminal private key is used for encrypting the hash.

Furthermore, it is noted, that the user terminal 4 may generally either provide the data structure 80 or the hash of the data structure 80 to the device. In the following when it is mentioned that the data structure 80 is transmitted between the device 2 and the user terminal 4 it will be understood that this may also refer to simply the hash of the data structure 80 being transmitted even if not explicitly stated.

In other words, a user of the user terminal 4 that intends to digitally sign a data structure 80 with his respective private key 22 stored on an external device 2, such as a smart card, may initiate a method according to the present invention. The data structure 80, or a hash of the data structure 80 to be signed may be transmitted to the device utilizing the communication module 44 of the user terminal 4, which may establish a connection to the communication interface 24 of the device 2, e.g. a secure encrypted communication channel. Furthermore, the user terminal 4 may require authentication of the user for granting access to the data element 42 stored in the secure portion 40. For example, the user may be prompted to provide a PIN or biometric data, e.g. by means of a fingerprint scanner or a camera for facial recognition or iris scans. Thus, the user terminal 4 may for example comprise a fingerprint sensor and/or a camera. Once access to the secure portion 40 is granted based on a successful authentication, the comprised data element 42 may also be transmitted to the device 2 by means of the communication module 44 and the communication interface 24, e.g. via a wired or wireless connection. That is, the data element 42 is transmitted from the user terminal 4 to the device 2. Again, it is noted that this is merely an example and that the data element 42 may also be provided by means of a co-signed data structure or a PIN.

It will be understood that the user terminal 4 may also initially provide the data element 42 to the device 2 and only then provide the data structure 80 or the hash of the data structure 80 to be signed. That is, the order of providing the data element 42 and the data structure 80 to the device 2 may be changed. Alternatively, both may be provided together, i.e. approximately at the same time.

In response to receiving the data element 42 (and the data structure 80 or the hash of the data structure 80), the device 2 digitally signs the data structure 80 by means of the private key 22. That is, access to the private key 22 may be subject to the transmission of the respective data element 42, such as a PIN or the co-signed data structure. For example, the private key 22 may be stored in a secure section 20 of the device 2 which may only be accessible upon provision of the respective data element 42. Once the data element is transmitted by the user terminal 4, the device 2 may digitally sign the data structure 80 utilizing the private key 22. That is, the device 2 may encrypt the hash of the data structure 80 by means of the private key 22. Thereby, the device 2 may generate a signed data structure hash, which may for example be combined with the data structure 80 to provide the signed data structure 82 which may then be transmitted back to the user terminal 4. Alternatively, the device may only transmit the signed data structure hash, i.e. the digital signature, and the user terminal 4 may combine the signed data structure hash with the data structure to provide the signed data structure 82.

Such a method may advantageously allow for secure and user-friendly signing of data structures 80. High security can be achieved by requiring a first authentication on the user terminal 4 to gain access to the data element 42 or the user terminal private key in the secure portion 40 of the user terminal 4 and further the signing of the data structure on a separate device 2 comprising the private key 22, which may only sign the data structure 80 upon receiving of the data element 42. Thus, in addition to the requirement that the user is in possession of the device 2 comprising the private key 22 and that access to the private key is authorised by means of the data element 42, the present invention may at least in some embodiments further require authentication of the user on the user terminal 4. Thus, in some embodiments, the present invention may implement a two-factor authorisation. However, as stated before, a basic version of the present invention may not rely on the additional authentication of the user for accessing the secure portion 40 of the user terminal, but may instead rely on a PIN as data element 42 for example in combination with a tamper proof chip only allowing for at most 3 trials for entering the correct PIN.

The method may for example advantageously be used for signing blockchain-based smart contracts provided to the user terminal 4. That is, blockchain-based smart contracts may constitute a respective data structure 80 that is digitally signed by applying the disclosed method.

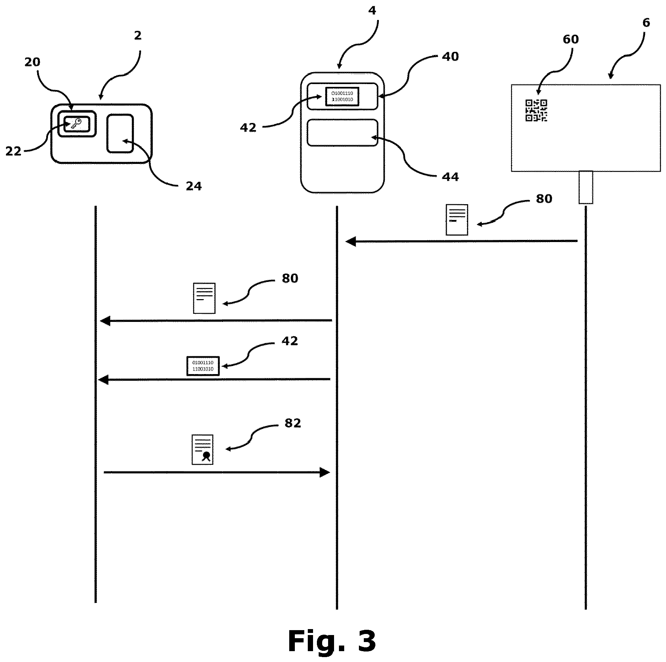

With reference to Fig. 3, a respective embodiment is discussed. Smart contracts may generally be received via a network, for example the internet, and can correspond to blockchain transactions. For example, a (unsigned) smart contract or smart contract interaction may be generated by a wallet or any kind of web-based application and a respective QR-code 60 may be provided. The QR code 60 may be displayed on a screen 6 of a desktop computer or any other suitable device. The generation of the QR code 60 may for example be performed according to the ESR/EEP-7 standard.

Subsequently, the user terminal 4, e.g. a smartphone, may read, e.g. scan, the QR code 60 and in response receive the smart contract 80, i.e. the data structure 80 to be signed.

Thus, the user terminal 4 may be configured to read QR codes 60. For example, it may comprise a camera for detecting QR codes 60 and corresponding instructions, e.g. applications, for extracting the information provided by the QR code 60. In other words, the user terminal 4 may be configured to scan a QR code 60 and retrieve the corresponding information. The smart contract may for example be received via a network, e.g. the internet, wherein the QR code may comprise the information for receiving the smart contract 80, e.g. the QR code may comprise an address for downloading the smart contract.

Once the user terminal 4 receives the data structure 80 to interact or send commands to a smart contract, e.g. smart contract interactions 80, it may decode and display said data structure 80, e.g. contained instructions and/or commands, to the user for an additional verification in a user friendly and/or readable way. Thus, the user terminal 4 may comprise a visual interface, e.g. a screen, configured to display information to the user. Upon verification of the smart contract 80, it may be transmitted from the user terminal 4 to the device 2, for example utilizing NFC. That is, the smart contract 80 or smart contract interactions 80 may be transmitted to the device 2 via a connection established between the communication module 44 of the user terminal 4 and the communication interface 24 of the device 2. Preferably, the data structure 80 (e.g. smart contract or smart contract interaction) may be transmitted via NFC. Again, it will be understood that also the hash of the data structure 80 may be transmitted to the device 2 instead of the complete data structure 80.

Very generally signing of a smart contract may also refer to signing of smart contract interactions. That is, users of a smart contract may sign instructions sent to the respective smart contract. For example, assuming an on-chain casino, the QR code generated by a website, e.g. of the casino, may for example comprise the instructions "bet on black". The user terminal 4 would decode the generated QR code and display the instruction to the user who would in turn verify that he is about to sign the instruction "bet on black". Thus, the user would sign a smart contract instruction rather than the smart contract itself, which may typically be signed by its creator, e.g. the casino. However, in the context of this document, signing a smart contract may also relate to signing specific instructions of/to a smart contract.

By showing the decoded data structure 80, e.g. a transaction or a smart contract instruction, to the user directly before sending it to the device and asking for verification thereof, the user may advantageously be prevented from signing the wrong transaction, which may for example not be reversible once broadcasted to the network. Verification of the user may for example be provided by pressing a physical or virtual button confirming that the displayed data structure is the data structure to be signed.

The device 2 may comprise the private key 22 in a secure section 20 and may be configured to digitally sign the smart contract command/interaction more generally the data structure 80, or respectively a hash of it. However, for accessing the private key 22 in the secure section 20, the device 2 may require transmission of a respective data element 42, e.g. a cryptographic key, a PIN or the co-signed data structure, by the user terminal 4. The data element 42 may be comprised by a secure portion 40 of the user terminal 4, which may be access protected and require a respective authentication of the user. Authentication may be provided by entering a password, e.g. PIN, and/or providing biometric data corresponding to a biometric feature of the user. Upon successful authentication, the user terminal may transmit the data element 42 to the device 2, which may thus access the private key 22 in the secure section 20 and digitally sign the smart contract 80 by means of the private key 22. For example, the device 2 may generate a hash of the smart contract 80 (e.g. unless generated before by device 4), and encrypt it with the private key 22 to generate the digital signature. Advantageously the data structure 80 may be digitally signed within the secure section 20 of the device 2, that is the hash of the data structure 80 may be encrypted using the private key 22. Thus, the private key 22 may not be transferred and/or be known outside of the secure section 20.

Upon successfully signing the smart contract interaction 80, the signed smart contract interaction 82 may be transmitted back to the user terminal 4, which may broadcast the signed smart contract interaction 82 to the respective blockchain network.

The above has been described with respect to smart contracts 80 or respectively smart contract interactions 80 as data structures 80. However, it will be understood that the method can generally be applied to all kinds of data structures 80, which may also include documents, such as digital versions of paper contracts.

In other words, the present invention may provide a secure and user-friendly signature functionality, that may advantageously be used for signing data structures such as smart contracts, e.g. blockchain transactions. A user terminal 4, e.g. a smartphone, may for example comprise an application configured to read a QR code 60 on the screen 6 of a computer. The QR code 60 may correspond to a smart contract interaction or command and may be generated by a wallet or a web-based application. Upon reading the QR code 60, the application may display the decoded and readable smart contract interaction on a screen of the user terminal 4 for verification by the user. Once the user verified the smart contract on the user terminal 4, the user terminal 4 may conditional to authentication via biometric features or password open up its secure portion 40, e.g. secure enclave, comprising the data element 42, e.g. a cryptographic secret (or key), a PIN or the co-signed data structure, for access to the external device 2, e.g. an external secure chip smart card. Subsequently, the device 2, e.g. the secure chip on the smart card, may perform the signature in its secure section 20 comprising the private key 22 and send the signed smart contract interaction back to the user terminal 4, which may broadcast the signed smart contract via an internet connection.

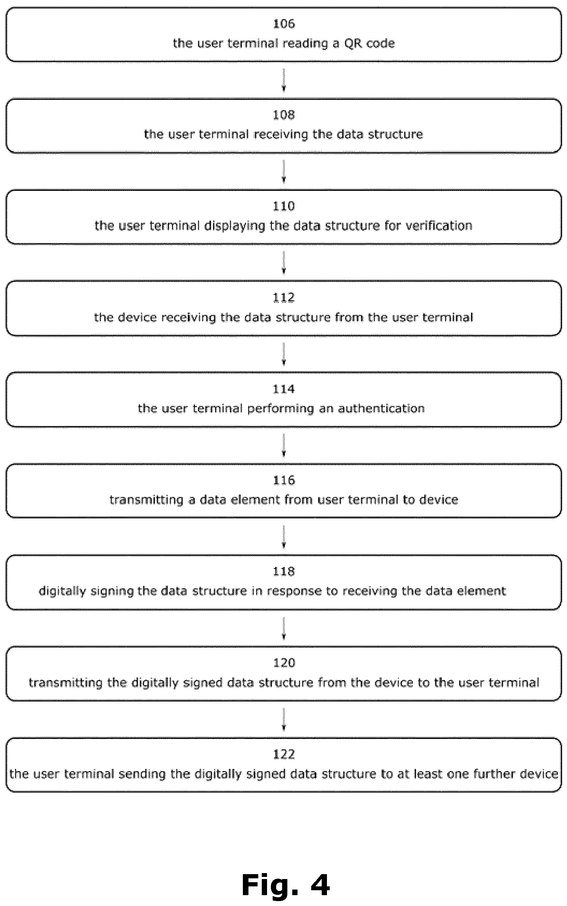

With reference to Fig. 4, steps of an embodiment of the method for digitally signing a data structure are discussed. It is noted that not all of the steps depicted in Fig. 4 and discussed below are required in each embodiment of the method, in contrast, the method may only rely on a subset of the depicted steps, or include further steps.

Very generally the method may comprise using a device 2 comprising a private key 22 and a user terminal 4 comprising a secure portion 40 which in turn comprises a data element 42. That is, for example a system as depicted in Fig. 1 may be used. It will be understood that using these components may refer to generally using them for implementing further steps of the method. That is, the device 2 and the user terminal 4 may evidently be used throughout the method.

The method may comprise the step 106 of the user terminal 4 reading a QR code 60. For example, the user terminal may read a QR code 60 generated by a wallet or any other kind of web application designed to generate QR codes comprising information relevant to data structures 80 requiring a digital signature. Such QR codes may particularly be generated for blockchain transactions such as smart contracts, smart contract instructions and/or smart contract commands. The QR code 60 may for example be displayed on a screen 6 connected to a device generating the QR code or the internet, wherein for example a server may provide the relevant QR code.

In a next step 108, the user terminal 4 may receive the data structure 80 to be signed. That is, for example in response to reading the QR code 60, the user terminal 4 may receive the data structure 80. However, it will be understood that the user terminal 4 may also receive the data structure 80 in a different fashion, e.g. by directly downloading it from the internet. That is, for example, step 106 may be optional.

Once the user terminal 4 has received the data structure 80, it may display the same for verification (step 110). For example, the user terminal 4 may comprise a screen for displaying information, such as the data structure 80 which may in turn be verified by the user of the user terminal 4.

Subsequently, the user terminal 4 may transmit the data structure 80 to the device 2. That is, the device 2 may receive the data structure 80 from the user terminal 4 (step 112). Alternatively, the user terminal 4 may determine, e.g. calculate, the hash of the data structure and only transmit the hash of the data structure 80 to the device 2. That is the device 2 may receive the hash of the data structure (not shown). For transmitting/receiving of the data structure 80 (and/or the hash of the data structure 80), a communication between the device 2 and the transmitting (i.e. sending) device, e.g. the user terminal 4, may be established. Such a communication may be established via wired or a wireless connection. Preferably, the (hash of the) data structure 80 is transmitted and received by means of wireless communication and particularly by means of near-field communication (NFC). In some embodiments, the communication between the user terminal 4 and the device may be via a secure encrypted channel.

For digitally signing of the data structure 80 (or its hash), access to the private key 22 comprised by, e.g. stored on, the device 2, is provided. For accessing the private key 22, transmission of the data element 42 in the user terminal 4 may be required. Thus, in a next step 114 the user terminal 4 may perform an authentication of the user for accessing the data element 42 which is comprised by, e.g. stored in, a secure portion 40 of the user terminal 4. Authentication may for example comprise using a biometric feature, such as a finger print, or a facial or retina scan, and/or a password, e.g. a PIN. The password and/or biometric feature may be recorded and verified by the user terminal 4. Upon successful authentication, the data element 42 may be transmitted from the user terminal 4 to the device 2 (step 116). Again, the transmission may preferably take place via wireless communication and particularly near-field communication (NFC).

Alternatively, the data element 42 may be provided by a PIN, password, or biometric feature which may for example be stored in the user terminal or be provided to the user terminal by the user (not shown). In a further alternate embodiment, the secure portion 40 may comprise a user terminal private key which may in turn be used to co-sign the data structure 80 once access to the secure portion 40 is granted. Thus, in such an embodiment, the co-signed data structure may constitute the data element 42.

In response to receiving the data element 42, the device 2 may then encrypt the hash of the data structure 80 by means of the private key 22, which may also be referred to as digitally signing the data structure 80 using the private key 22 (step 118). Thus, if the device has not already been provided with the hash of the data structure 80, it may first determine said hash of the data structure and subsequently encrypt the determined hash utilizing the private key 22. Thereby, the device 2 may generate a signed data structure hash, also referred to as digital signature, based on the private key 22 comprised by the device 2 and based on an algorithm for providing a digital signature, e.g. RSA (Rivest-Shamir-Adleman), ECDSA (Elliptic Curve Digital Signature Algorithm), or EdDSA (Edwards-curve Digital Signature Algorithm). The device 2 may generate a digitally signed data structure 82 by combining at least the digital signature, i.e. the signed data structure hash, with the data structure itself.

Subsequently, the digitally signed data structure 82 may be transmitted from the device 2 to the user terminal 4 (step 120). Again, said transmission may preferably take place via wireless communication and particularly NFC. Alternatively, the device may only transmit the signed data structure hash and the user terminal may then generate the digitally signed data structure 82 comprising the signed data structure hash and the data structure 80. Once the user terminal 4 received (or generated) the digitally signed data structure 82, it may send said signed data structure 82 to at least one further device. For example, the user terminal 4 may send the digitally signed data structure 82 back to the original provider of the data structure 80 or to a third party, e.g. via an internet connection. In some embodiments, the user terminal 4 may broadcast the digitally signed data structure 82 to a respective blockchain network.

Again, it is noted that not all of the above steps are mandatory for the method according to the present invention and that some of the steps may be omitted as for example indicated above for some of the steps. Furthermore, it is noted that the order the steps may also be changed where appropriate, e.g. for unconditional steps. For example, the data structure 80 may be received by the device 2 only after receiving the data element 42.

Again, a data structure 80 may for example refer to any of a blockchain transaction, a (blockchain-based) smart contract and in some embodiments also any other kind of digital document that requires a digital signature.

In summary, the present invention allows for digitally signing a data structure with improved security, while keeping the process easily accessible to the end user. The increased security is provided by separating the private key 22 and the user terminal 4. That is, the storage of the private key 22 is physically separated from the device that may initiate the signing process (i.e. user terminal 4), which may provide an additional security level, e.g. against malware attacks. Further, additional security may for example be provided by the secure portion 40 (if present) and the secure section 20 which both may require authorisation for granting access and therefore for accessing the private key. Therefore, the present invention may in some embodiments realize a two-step authorisation for providing the signature, or, in other words, a double secure setup may be realized. For example, by providing a smartphone comprising a secure portion 40 and a respective smart card, which may communicate via NFC and thus both need to be in possession of the user authorizing the signature. Additionally, the digital structure/QR code is verified by the user terminal prior to digital signing thereof.

Furthermore, such a system may allow for duplicating the device, e.g. the smart card, as a backup option for potential loss of the device.

Whenever a relative term, such as "about", "substantially" or "approximately" is used in this specification, such a term should also be construed to also include the exact term.

That is, e.g., "substantially straight" should be construed to also include "(exactly) straight".

Whenever steps were recited in the above or also in the appended claims, it should be noted that the order in which the steps are recited in this text may be accidental. That is, unless otherwise specified or unless clear to the skilled person, the order in which steps are recited may be accidental. That is, when the present document states, e.g., that a method comprises steps (A) and (B), this does not necessarily mean that step (A) precedes step (B), but it is also possible that step (A) is performed (at least partly) simultaneously with step (B) or that step (B) precedes step (A). Furthermore, when a step (X) is said to precede another step (Z), this does not imply that there is no step between steps (X) and (Z). That is, step (X) preceding step (Z) encompasses the situation that step (X) is performed directly before step (Z), but also the situation that (X) is performed before one or more steps (Yl), ..., followed by step (Z). Corresponding considerations apply when terms like "after" or "before" are used.

While in the above, a preferred embodiment has been described with reference to the accompanying drawings, the skilled person will understand that this embodiment was provided for illustrative purpose only and should by no means be construed to limit the scope of the present invention, which is defined by the claims.

## Claims

1. A method,
wherein the method comprises
using a device comprising a private key;
transmitting a data element from the user terminal to the device;
in response to receiving the data element, the device encrypting a hash of a data structure by means of the private key and thereby generating a signed data structure hash; and
wherein the device comprises a secure section and wherein the secure section comprises the private key.

2. The method according to claim 1, wherein the user terminal comprises a secure portion and wherein the secure portion comprises
the data element and/or
a user terminal private key.

3. The method according to the penultimate method embodiment, wherein the method comprises the user terminal receiving the data element from a user.

4. The method according to any of the preceding claims, wherein the data element is transmitted from the user terminal to the device by means of wireless communication.

5. The method according any of the preceding claims, wherein encrypting the hash of the data structure is performed within the secure section.

6. The method according to any of the preceding claims, wherein the method comprises the user terminal receiving the data structure.

7. The method according to the preceding claim, wherein the method comprises the user terminal determining the hash of the data structure.

8. The method according to the preceding claim and with the features of claim 2, wherein the method comprises the user terminal encrypting the hash of the data structure by means of the user terminal private key and thereby generating the data element.

9. The method according to any of the preceding claims, wherein the method further comprises generating a digitally signed data structure comprising the signed data structure hash and the data structure.

10. The method according to any of the preceding claims, wherein the method further comprises transmitting at least the signed data structure hash from the device to the user terminal by means of wireless communication.

11. The method according to the preceding claim and with the features of claim 9, wherein the method further comprises the user terminal sending the digitally signed data structure to at least one further device.

12. The method according to any of the preceding claims, wherein the method further comprises the device receiving the data structure or the respective hash of the data structure before digitally signing it, wherein the method further comprises the device determining the hash of the data structure if receiving the data structure.

13. The method according to any of the preceding claims, wherein the method further comprises authentication performed by the user terminal, wherein the data element is transmitted from the user terminal to the device in response to a successful authentication

14. The method according to any of the preceding claims, wherein the method further comprises establishing a secure encrypted channel between the device and the user terminal.

15. A system comprising
a device comprising a private key and a communication interface, configured for exchanging data with external devices;
a user terminal comprising a communication module, configured for exchanging data with external devices; and
wherein the system is configured to perform the method according to any of the preceding claims.
